# EUROPEAN PATENT APPLICATION

(11) **EP 3 835 734 A1**
(43) Date of publication of application: **16.06.2021**
(21) Application number: 19848262.2
(22) Date of filing: 12.07.2019
(51) Int. Cl.: G01F 1/66

(54) **ULTRASONIC FLOW METER**

(30) Priority: 09.08.2018 JP 2018149814
(71) Applicant: Panasonic Intellectual Property Management Co., Ltd., Osaka-shi, Osaka 540-6207 (JP)
(72) Inventor: TAKAHASHI, Yukihide, Osaka-shi, Osaka 540-6207 (JP); NAKAI, Hiroshi, Osaka-shi, Osaka 540-6207 (JP); YASUDA, Kenji, Osaka-shi, Osaka 540-6207 (JP); KAYABA, Takashi, Osaka-shi, Osaka 540-6207 (JP); ANAN, Yuki, Osaka-shi, Osaka 540-6207 (JP)
(74) Representative: SSM Sandmair
(86) International application number: PCT/JP2019/027784
(87) International publication number: WO 2020/031622

(57) **Abstract**

An ultrasonic flow meter includes measurement flow path (1) through which a fluid to be measured flows, and first ultrasonic sensor (2a) and second ultrasonic sensor (2b) that are disposed upstream and downstream in a first surface on measurement flow path (1) and are capable of transmitting and receiving an ultrasonic signal. In addition, the ultrasonic flow meter includes a flow rate calculator that detects a flow rate of the fluid to be measured based on a propagation time, the propagation time being a time period from when the first ultrasonic sensor (2a) transmits the ultrasonic signal to cause the ultrasonic signal to propagate through the fluid to be measured and be reflected on a second surface facing the first surface at least once until when the second ultrasonic sensor (2b) receives the ultrasonic signal. Measurement flow path (1) includes openings (6a, 6b) through which sound waves radiated from first ultrasonic sensor (2a) and second ultrasonic sensor (2b) enter the measurement flow path, measurement flow path (1) and openings (6a, 6b) are integrally molded, and an unnecessary sound wave suppressing portion is disposed at an edge located at least one of an upstream side and a downstream side of each of openings (6a, 6b).

## Description

### TECHNICAL FIELD

The present invention relates to an ultrasonic flow meter that measures a propagation time of ultrasonic waves to calculate a flow rate.

### BACKGROUND ART

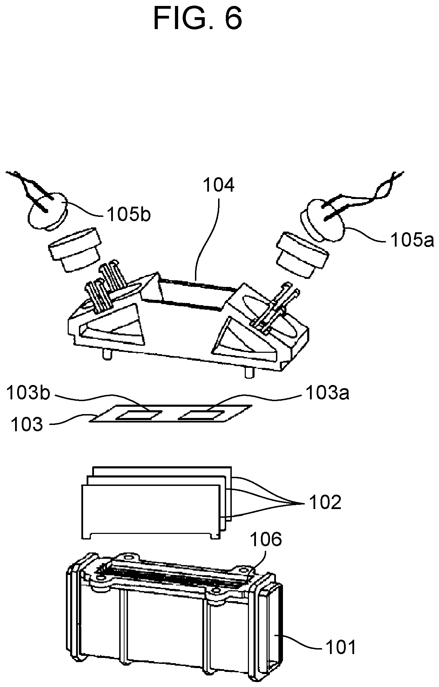

Conventionally, a configuration of this type of ultrasonic flow meter is as illustrated in FIG. 6, for example.

As illustrated in FIG. 6, the conventional ultrasonic flow meter includes measurement flow path 101, entrainment flow suppressing sheet 103 that covers opening 106 of measurement flow path 101, ultrasonic sensor mounting block 104, ultrasonic sensors 105a, 105b, and three partition plates 102 that divide measurement flow path 101 into a plurality of flow paths.

Note that measurement flow path 101, entrainment flow suppressing sheet 103, and ultrasonic sensor mounting block 104 are formed as separate components. At the time of assembly, after partition plates 102 are inserted into measurement flow path 101 from opening 106, entrainment flow suppressing sheet 103 is mounted so as to cover opening 106, and ultrasonic sensor mounting block 104 is fixed to measurement flow path 101 by a method such as welding. Entrainment flow suppressing sheet 103 is provided with openings 103a, 103b. Openings 103a, 103b are each adjusted to such a size that turbulence due to an entrainment flow of a fluid to be measured is unlikely to occur in the vicinity of ultrasonic sensors 105a, 105b while passing ultrasonic waves (for example, see PTL 1).

### Citation List

### Patent Literature

PTL 1: Unexamined Japanese Patent Publication No. 2014-215060

### SUMMARY OF THE INVENTION

However, in the configuration of the conventional ultrasonic flow meter illustrated in FIG. 6, measurement flow path 101, entrainment flow suppressing sheet 103, and ultrasonic sensor mounting block 104 are formed as separate components, and thus material costs and assembly costs for components have been incurred. Therefore, it is conceivable to reduce the number of components to reduce the costs by molding a plurality of components into one without using entrainment flow suppressing sheet 103.

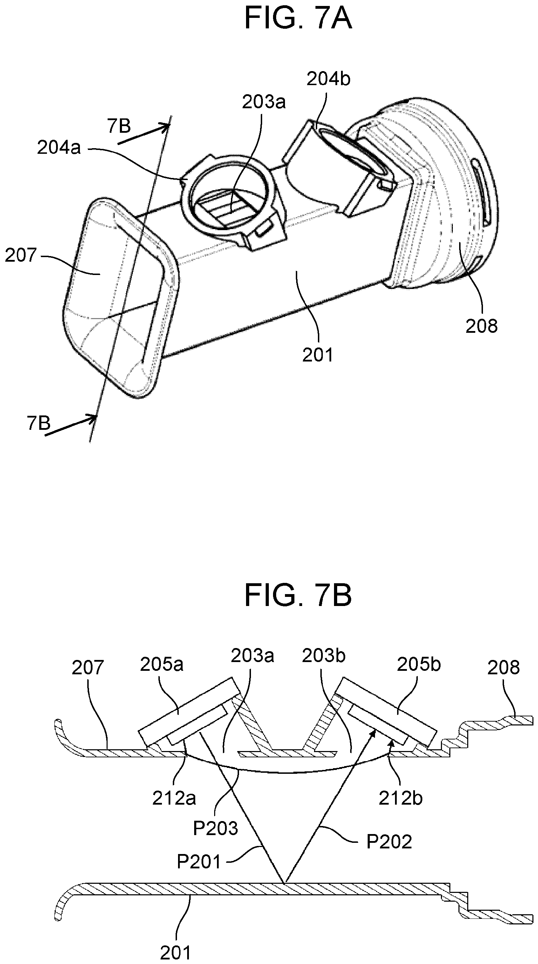

Here, FIGS. 7A and 7B illustrate an example of an ultrasonic diversion meter in which a plurality of components is molded into one, so that the number of components is reduced. FIG. 7A is a perspective view of an ultrasonic flow meter including measurement flow path 201 in which measurement flow path 101, openings 103a, 103b, and ultrasonic sensor mounting block 104 of the ultrasonic flow meter illustrated in FIG. 6 are integrally molded. FIG. 7B is a cross-sectional view taken along line 7B-7B of FIG. 7A.

Openings 203a, 203b of measurement flow path 201 each have a rectangular shape similarly to openings 103a, 103b of entrainment flow suppressing sheet 103 illustrated in FIG. 6, but openings 203a, 203b are thicker than entrainment flow suppressing sheet 103 because openings 203a, 203b are formed by resin molding.

Here, in a case where ultrasonic waves transmitted from ultrasonic sensor 205a are received by ultrasonic sensor 205b, the ultrasonic waves propagate along propagation path P201, are reflected by a bottom surface of measurement flow path 201, propagate along propagation path P202, and reach ultrasonic sensor 205b.

To form openings 203a, 203b and ultrasonic sensor mounting portions 204a, 204b, a mold is pulled out in the same direction as propagation path P201 and propagation path P202 at the time of molding. Thus, edges 212a, 212b of openings 203a, 203b are formed with surfaces parallel to propagation path P201 and propagation path P202, respectively.

As a result, the ultrasonic waves transmitted from upstream ultrasonic sensor 205a are reflected by upstream edge 212a of opening 203a, reach downstream edge 212b of other opening 203b while being diffracted, are reflected by edge 212b, and reach downstream ultrasonic sensor 205b. Therefore, the ultrasonic waves propagate to ultrasonic sensor 205b on a receiving side as unnecessary sound waves through propagation path P203 shorter than assumed propagation paths P201, P202.

Therefore, the ultrasonic waves propagating through propagation path P203 (unnecessary sound waves) are superimposed on the ultrasonic waves propagating through normal propagation paths P201, P202. A propagation time is measured at a timing when a predetermined voltage of a received waveform is detected. The superposition of the unnecessary sound waves makes the received waveform unstable, and the timing of detecting the predetermined voltage deviates, which causes an error in a measured flow rate.

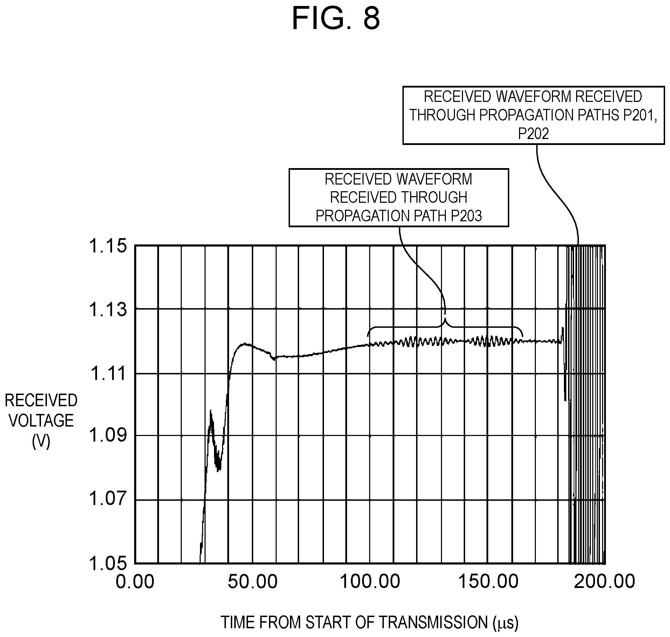

FIG. 8 is a waveform diagram illustrating received waveforms in a case where measurement flow path 201 of the ultrasonic flow meter illustrated in FIGS. 7A and 7B is used, and a received waveform received through propagation path P203 can be seen before a normal received waveform received through propagation paths P201, P202 is received.

Ultrasonic sensors 205a, 205b emit the ultrasonic waves by being given an emission signal of several pulses from the outside. An ultrasonic signal radiating portion vibrates for a while even after an application of the emission signal is stopped, and an ultrasonic signal based on this continuous vibration also propagates through propagation path P203. Therefore, if the vibration continues for a longer time than a time difference between a propagation time in a case where the ultrasonic waves pass through propagation paths P201, P202 and a propagation time in a case where the ultrasonic waves pass through propagation path P203, the received waveform is not a waveform of only an ultrasonic signal received through propagation paths P201, P202, but a waveform of a composite wave of the ultrasonic signal received through propagation paths P201, P202 and an ultrasonic signal received through propagation path P203, and thus an error occurs in a measured propagation time.

The present invention provides an ultrasonic flow meter that reduces the number of components and costs by integrally molding a portion corresponding to a conventional entrainment flow suppressing sheet with other components, while suppressing unnecessary sound waves, stabilizing a received waveform, and maintaining the accuracy of flow rate measurement.

An ultrasonic flow meter in the present disclosure includes a measurement flow path through which a fluid to be measured flows, and a pair of ultrasonic sensors that are disposed upstream and downstream in a first surface on the measurement flow path and are capable of transmitting and receiving an ultrasonic signal. In addition, the ultrasonic flow meter includes a flow rate calculator that detects a flow rate of the fluid to be measured based on a propagation time, the propagation time being a time period from when the first ultrasonic sensor transmits the ultrasonic signal to cause the ultrasonic signal to propagate through the fluid to be measured and be reflected on a second surface facing the first surface at least once until when the second ultrasonic sensor receives the ultrasonic signal. Furthermore, the measurement flow path includes openings through which sound waves radiated from the ultrasonic sensors enter the measurement flow path,, the measurement flow path and the openings are integrally molded, and an unnecessary sound wave suppressing portion is disposed at an edge located at least one of an upstream side and a downstream side of each of the openings.

With this configuration, the ultrasonic flow meter in the present disclosure can reduce the number of components and the costs by integrally molding the portion corresponding to the entrainment flow suppressing sheet with other components, while suppressing the unnecessary sound waves, stabilizing the received waveform, and maintaining the accuracy of the flow rate measurement.

### BRIEF DESCRIPTION OF DRAWINGS

FIG. 1 is a configuration diagram of an ultrasonic flow meter according to a first exemplary embodiment.
FIG. 2A is a perspective view of a flow path unit of the ultrasonic flow meter according to the first exemplary embodiment.
FIG. 2B is a cross-sectional view taken along line 2B-2B of FIG. 2A.
FIG. 3 is a diagram of a received waveform of the ultrasonic flow meter according to the first exemplary embodiment.
FIG. 4A is a perspective view of an ultrasonic flow meter according to a second exemplary embodiment.
FIG. 4B is an enlarged view of main components of the ultrasonic flow meter according to the second exemplary embodiment.
FIG. 5 is a cross-sectional view of an ultrasonic flow meter according to a third exemplary embodiment.
FIG. 6 is an exploded perspective view of a conventional ultrasonic flow meter.
FIG. 7A is a perspective view of a conventional ultrasonic flow meter integrally molded.
FIG. 7B is a cross-sectional view taken along line 7B-7B of FIG. 7A.
FIG. 8 is a diagram of received waveforms of the ultrasonic flow meter using measurement flow path 201.

### DESCRIPTION OF EMBODIMENTS

Hereinafter, exemplary embodiments will be described with reference to the drawings. Note that the present disclosure is not limited to these exemplary embodiments.

### (First exemplary embodiment)

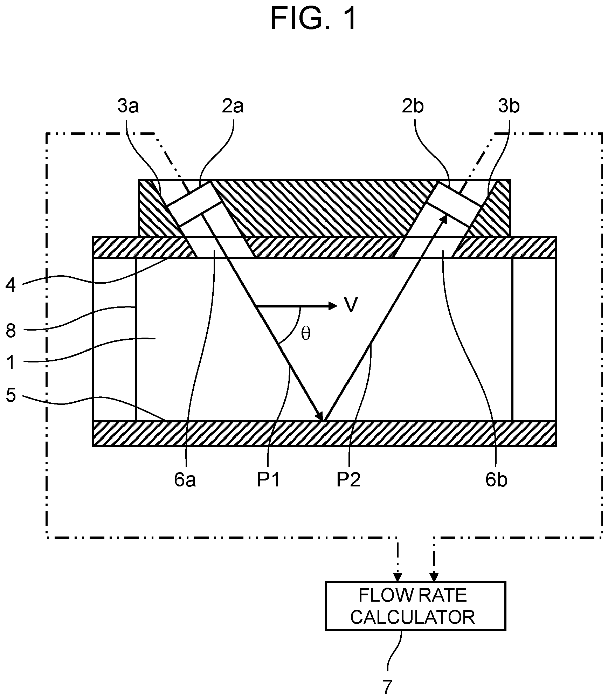

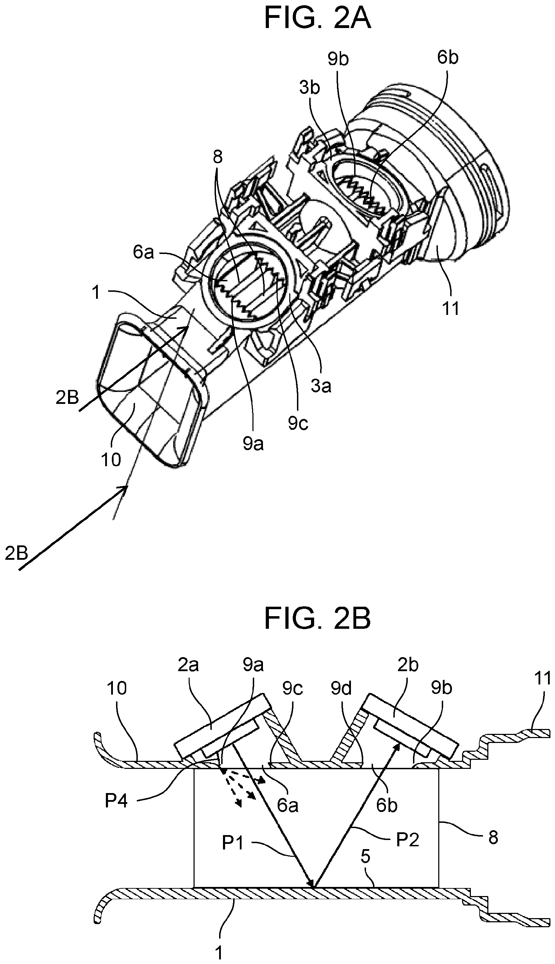

FIG. 1 is a configuration diagram of an ultrasonic flow meter according to a first exemplary embodiment. FIG. 2A is a perspective view of a measurement flow path of the ultrasonic flow meter according to the first exemplary embodiment. FIG. 2B is a cross-sectional view taken along line 2B-2B of FIG. 2A.

Measurement flow path 1 is a pipe from flow path inlet 10 to flow path outlet 11 through which a fluid to be measured is passed, and is divided into three layered flow paths by two partition plates 8. Openings 6a, 6b through which ultrasonic waves propagate so that the ultrasonic waves are transmitted and received diagonally to measurement flow path 1 are provided on upper surface 4, which is a first surface of measurement flow path 1, and ultrasonic sensors 2a, 2b are fixed to mounting portions 3a, 3b so that the ultrasonic waves are reflected by bottom surface 5, which is a second surface of measurement flow path 1, and pass through propagation paths P1 and P2.

Ultrasonic sensors 2a, 2b are connected to flow rate calculator 7. As illustrated in FIGS. 2A and 2B, uneven portions 9a, 9b, 9c, 9d are provided on two edges on a downstream side and an upstream side of each of openings 6a, 6b. Flow rate calculator 7 calculates a flow rate based on a propagation time of the ultrasonic waves between ultrasonic sensors 2a, 2b. The propagation time is measured at a timing when a predetermined voltage of a received waveform is detected.

All the ultrasonic waves emitted from ultrasonic sensors 2a, 2b do not advance perpendicular to radiation surfaces of ultrasonic sensors 2a, 2b, but a part of the ultrasonic waves also hit the periphery of openings 6a, 6b, and are reflected. As described in a conventional example, in a case where surfaces of edges of the openings are made parallel to propagation paths P1, P2, the received waveform is unstable due to unnecessary sound waves, which causes an error in a measured flow rate. However, in the ultrasonic flow meter according to the present exemplary embodiment, uneven portions 9a, 9b, 9c, 9d disposed on the upstream and downstream edges of each of openings 6a, 6b each have a jagged shape. For example, a thickness of each of openings 6a, 6b is 1.5 mm, and a plurality of equilateral triangles with a side length of 1.5 mm is arranged. Uneven portions 9a, 9b function as unnecessary sound wave suppressing portions that diffuse sound waves, and thus, in a case of FIG. 2B, it is difficult for the unnecessary sound waves to reach ultrasonic sensor 2b on a receiving side. Even in a case where the ultrasonic waves are radiated from ultrasonic sensor 2b, uneven portions 9a, 9b function as the unnecessary sound wave suppressing portions that diffuse the sound waves, and thus, it is difficult for the unnecessary sound waves to reach ultrasonic sensor 2a on the receiving side.

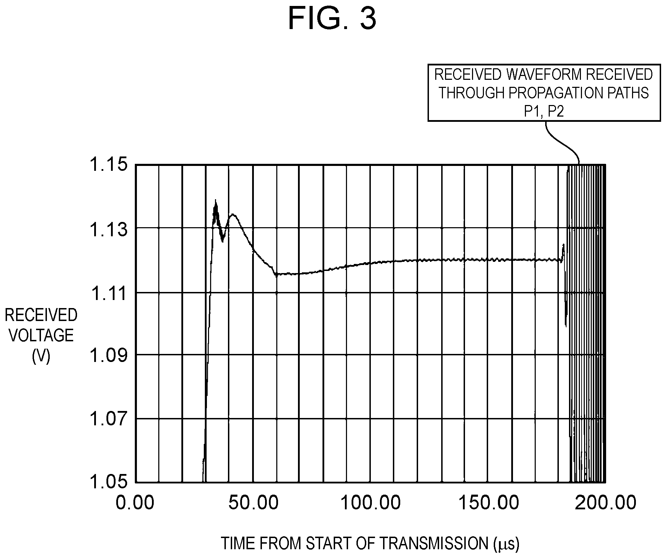

FIG. 3 illustrates the received waveform in a case where measurement flow path 1 of the ultrasonic flow meter in the present exemplary embodiment is used. From this received waveform, it can be seen that propagation of the unnecessary sound waves observed in the received waveform illustrated in FIG. 8 in a case where measurement flow path 201 illustrated in FIG. 7 is used is suppressed.

As described above, according to the present exemplary embodiment, the reflection of the unnecessary sound waves generated at the edges of the openings can be suppressed, and thus, even in a case where the openings each have a thickness (generally a thickness of 0.5 mm or more is required) in integral molding, the propagation time can be measured accurately, so that high-accuracy flow rate measurement can be performed.

### (Second exemplary embodiment)

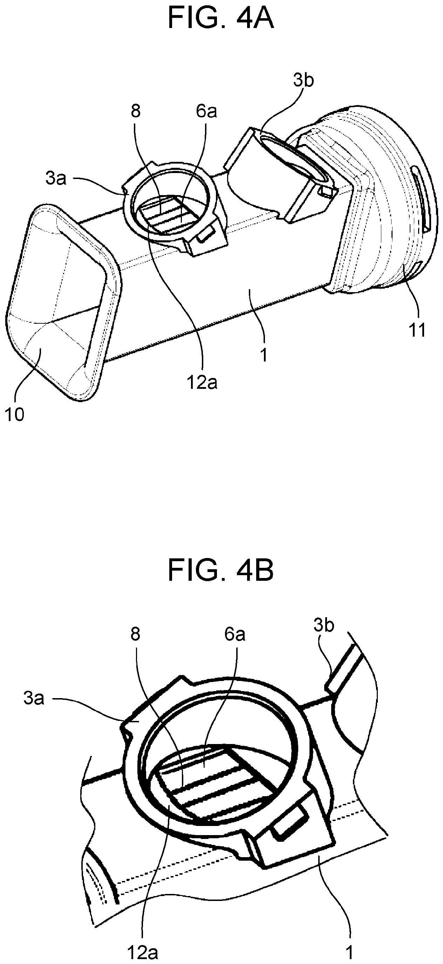

FIG. 4A is a perspective view of a measurement flow path of an ultrasonic flow meter according to a second exemplary embodiment, and FIG. 4B is an enlarged view of mounting portion 3a illustrated in FIG. 4A.

As illustrated in the drawings, an upstream edge of upstream opening 6a of measurement flow path 1 forms curved surface portion 12a as an unnecessary sound wave suppressing portion. A downstream edge of a downstream opening of measurement flow path 1 is also formed with a curved surface portion, which is not illustrated. In this way, since the edge of the opening is formed as curved surface portion 12a, sound waves transmitted from an ultrasonic sensor mounted on mounting portion 3a are diffused, so that the unnecessary sound waves can be less likely to reach an ultrasonic sensor mounted on mounting portion 3b.

### (Third exemplary embodiment)

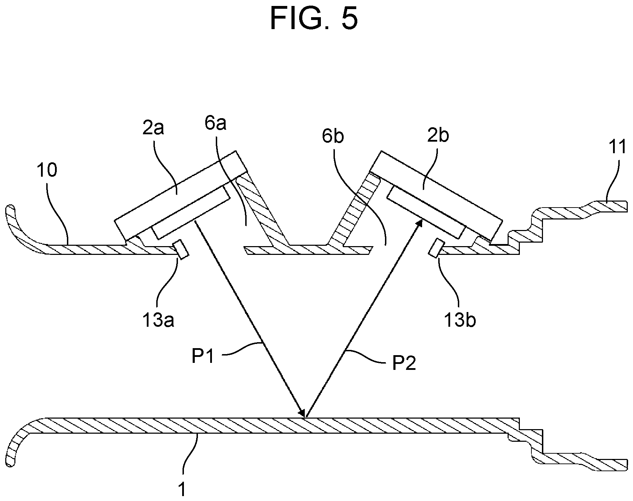

FIG. 5 is a cross-sectional view of an ultrasonic flow meter according to a third exemplary embodiment. As illustrated in the drawing, in the ultrasonic flow meter in the present exemplary embodiment, ultrasonic absorbing member 13a as an unnecessary sound wave suppressing portion is disposed at an upstream edge of upstream opening 6a of measurement flow path 1, and ultrasonic absorbing member 13b as the unnecessary sound wave suppressing portion is mounted on a downstream edge of downstream opening 6b of measurement flow path 1. By allowing ultrasonic absorbing members 13a, 13b to absorb sound waves, it is possible to make it difficult for unnecessary sound waves to reach another ultrasonic sensor.

Note that mounting positions and mounting ranges of ultrasonic absorbing members 13a, 13b may be determined by experiments or simulations.

As described above, an ultrasonic flow meter in a first disclosure includes a measurement flow path through which a fluid to be measured flows, and a first ultrasonic sensor and a second ultrasonic sensor that are disposed upstream and downstream in a first surface on the measurement flow path and are capable of transmitting and receiving an ultrasonic signal. In addition, the ultrasonic flow meter includes a flow rate calculator that detects a flow rate of the fluid to be measured based on a propagation time, the propagation time being a time period from when the first ultrasonic sensor transmits the ultrasonic signal to cause the ultrasonic signal to propagate through the fluid to be measured and be reflected on a second surface facing the first surface at least once until when the second ultrasonic sensor receives the ultrasonic signal. The measurement flow path includes openings through which sound waves radiated from the first ultrasonic sensor and the second ultrasonic sensor enter the measurement flow path, the measurement flow path and the openings are integrally molded, and an unnecessary sound wave suppressing portion is disposed at an edge located at least one of an upstream side and a downstream side of each of the openings.

With this configuration, it is possible to reduce the number of components and costs by integrally molding a portion corresponding to an entrainment flow suppressing sheet with other components, while unnecessary sound waves are suppressed, a received waveform is stabilized, and the accuracy of flow rate measurement is maintained.

According to an ultrasonic flow meter in a second disclosure, in the first disclosure, the unnecessary sound wave suppressing portion may have an uneven shape at the edge of each of the openings, to irregularly reflect the sound waves.

With this configuration, it is possible to reduce the number of components and the costs by integrally molding the portion corresponding to the entrainment flow suppressing sheet with other components, while the unnecessary sound waves are suppressed, the received waveform is stabilized, and the accuracy of the flow rate measurement is maintained.

According to a third disclosure, in the first disclosure, the unnecessary sound wave suppressing portion may have a curved surface at the edge of each of the openings, to diffusely reflect the sound waves.

With this configuration, it is possible to reduce the number of components and the costs by integrally molding the portion corresponding to the entrainment flow suppressing sheet with other components, while the unnecessary sound waves are suppressed, the received waveform is stabilized, and the accuracy of the flow rate measurement is maintained.

According to a fourth disclosure, in the first disclosure, the unnecessary sound wave suppressing portion may have an ultrasonic absorbing member mounted on the edge of each of the openings.

With this configuration, it is possible to reduce the number of components and the costs by integrally molding the portion corresponding to the entrainment flow suppressing sheet with other components, while the unnecessary sound waves are suppressed, the received waveform is stabilized, and the accuracy of the flow rate measurement is maintained.

### INDUSTRIAL APPLICABILITY

As described above, the ultrasonic flow meter according to the present invention makes it difficult for unnecessary sound waves to reach another ultrasonic sensor while reducing costs, and thus can reduce the number of components and the costs by integrally molding a portion corresponding to an entrainment flow suppressing sheet with other components, while suppressing the unnecessary sound waves, stabilizing a received waveform, and maintaining the accuracy of flow rate measurement.

### REFERENCE MARKS IN THE DRAWINGS

1 measurement flow path
2a first ultrasonic sensor
2b second ultrasonic sensor
3a, 3b mounting portion
4 upper surface (first surface)
5 bottom surface (second surface)
6a, 6b opening
7 flow rate calculator
8 partition plate
9a, 9b uneven portion (unnecessary sound wave suppressing portion)
12a, 12b curved surface portion (unnecessary sound wave suppressing portion)
13a, 13b ultrasonic absorbing member (unnecessary sound wave suppressing portion)

## Claims

1. An ultrasonic flow meter comprising:
a measurement flow path through which a fluid to be measured flows;
a first ultrasonic sensor and a second ultrasonic sensor that are disposed upstream and downstream in a first surface on the measurement flow path and are capable of transmitting and receiving an ultrasonic signal; and
a flow rate calculator that detects a flow rate of the fluid to be measured based on a propagation time, the propagation time being a time period from when the first ultrasonic sensor transmits the ultrasonic signal to cause the ultrasonic signal to propagate through the fluid to be measured and be reflected on a second surface facing the first surface at least once until when the second ultrasonic sensor receives the ultrasonic signal, wherein
the measurement flow path includes openings through which sound waves radiated from the first ultrasonic sensor and the second ultrasonic sensor enter the measurement flow path,
the measurement flow path and the openings are integrally molded, and
an unnecessary sound wave suppressing portion is disposed at an edge located at least one of an upstream side and a downstream side of each of the openings.

2. The ultrasonic flow meter according to claim 1, wherein the unnecessary sound wave suppressing portion has an uneven shape at the edge of each of the openings, to irregularly reflect the sound waves.

3. The ultrasonic flow meter according to claim 1, wherein the unnecessary sound wave suppressing portion has a curved surface at the edge of each of the openings, to diffusely reflect the sound waves.

4. The ultrasonic flow meter according to claim 1, wherein the unnecessary sound wave suppressing portion has an ultrasonic absorbing member mounted on the edge of each of the openings.
